# EUROPEAN PATENT SPECIFICATION

(11) **EP 1 382 494 B1**
(45) Date of publication and mention of the grant of the patent: **30.05.2007**
(21) Application number: 03291760.1
(22) Date of filing: 16.07.2003
(51) Int. Cl.: B60R 16/02

(54) **Relay box and method of housing at least one relay connector therein**
Relaisgehäuse und Methode zur Aufnahme mindestens eines Relaisverbinders
Boitier à relais et méthode pour y loger au moins un connecteur à relais

(30) Priority: 17.07.2002 JP 2002207863
(43) Date of publication of application: 21.01.2004
(73) Proprietor: Sumitomo Wiring Systems, Ltd., Yokkaichi-City, Mie, 510-8503 (JP)
(72) Inventor: Naitou, Tsutomu, Yokkaichi-city Mie 510-8503 (JP)
(74) Representative: Uchida, Kenji

(56) References cited:
- EP-A- 0 713 234
- EP-A- 0 939 010
- EP-A- 1 220 593
- WO-A-99/54973
- US-A- 5 980 306

## Description

The present invention relates to a relay box and more particularly to a relay box used in vehicles and which houses a relay-connector holder for fixing relay connectors.

Document EP 0 939 O10 discloses an accommodation block which accommodates electrical connectors for connection with electrical components such as wire harnesses, electrical and electronic circuits, electrical and electronic component parts and the like and is in use mounted in an electrical connection box. The invention further relates to the electrical connection box including the accommodation block mounted in it, particularly an electrical connection box of a vehicle such as an automobile. Its features are recited in the preamble of claim 1.

Document EP 1 220 593 discloses a common power circuit relay unit is formed by a fuse associated with this fuse, the fuse and the relay being common to vehicles. One common power circuit relay unit is formed by a fuse and plurality of relays associated with this fuse, the fuse and the relays being common to the vehicles or the grades. The relay units are releasably attached to a cover member.

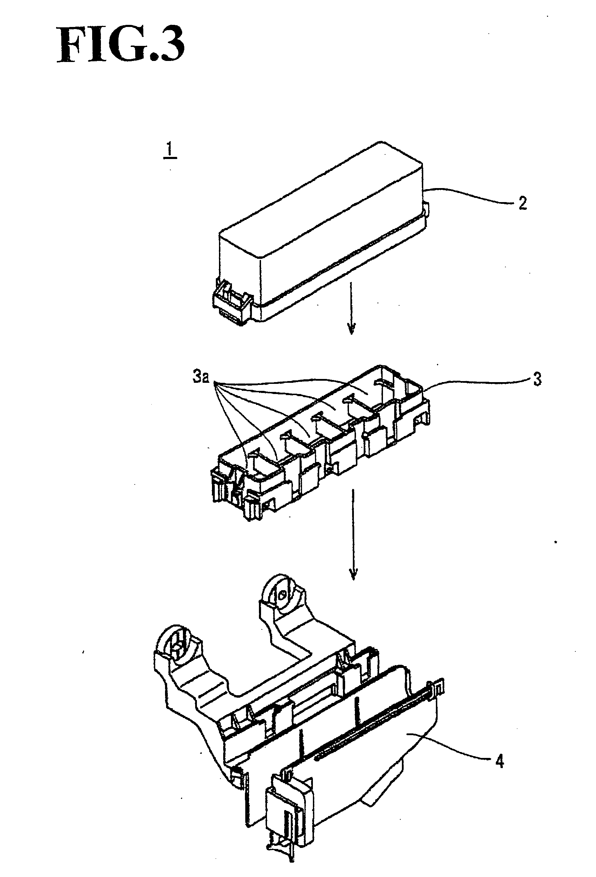

Figure 3 shows a first example of a relay box 1 according to the prior art. This relay box 1 is used in vehicles and contains an internal relay connector.

In Figure 3, the relay box 1 comprises a relay block 3 housed inside a lower cover 4. The relay block 3 has the shape of a frame and houses a relay connector (not shown in the figure) in a housing space 3a. The upper cover 2 closes the relay box 1.

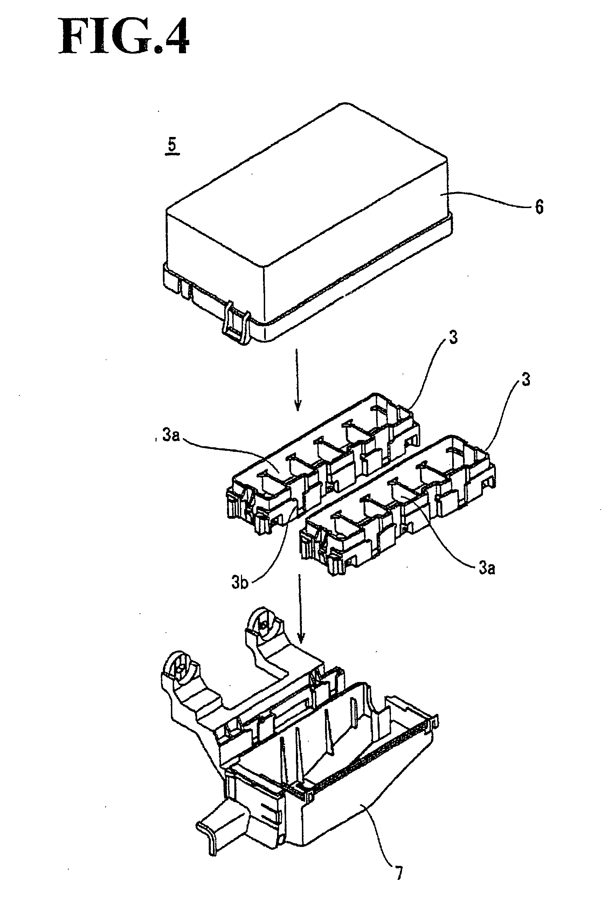

The relay block 3 of the above-mentioned relay box 1 comprises e.g. five housing spaces 3a. In this case, when six or more relay connectors need to be housed, another type of relay box 5, as shown in Figure 4, is used.

This relay box 5 comprises two relay blocks 3, each of which contains e.g. five housing spaces 3a. These two relay blocks 3 are aligned such that concave and convex intermediate members 3b provided on the opposing side faces of each relay block 3 cooperate by fixing one into the other, and the blocks 3 are contained in a lower cover. Then, an upper cover 6 closes the relay box 5.

However, recent years have witnessed a growingly high concentration of car parts in automobiles. As those car parts are mounted in an already-limited space, the space for installing relay boxes in vehicles has become confined, and the contour of the available space has become irregular.

The frame-shaped relay block 3 shown in Figure 3 always comprises e.g. five housing spaces 3a for housing the relay connectors. Accordingly, when a relay box 1 is intended to contain only four or fewer relay connectors, it is unnecessarily too large. In the same way, as shown in Figure 4, when nine or fewer relay connectors are to be loaded, the relay box 5 is also unnecessarily too large. In both cases, the relay boxes require too much space. Space optimisation is thus not efficient and creates structural problems.

Further, owing to the frame shape of the relay block 3, when the installation space of vehicles has an irregular shape (for example, a curved shape), the above-mentioned rectangular elongate relay block 3 cannot be used. Then, not only the upper covers 2, 6 and the lower covers 4, 7, but also the relay block 3 has to be newly built. The relay block 3 cannot thus provide a wide use.

Accordingly, one purpose of the present invention is to provide a relay box having an improved housing efficiency as regards the number of relay connectors that it can house, and to provide a relay block which can be used more widely.

For instance, when a commonly designed relay box comprises six relay connector enclosures and only four of them are used, two enclosures are left in idle state. In such a case, there may be prepared a relay box having a space sufficiently large to install four relay connectors. Such a relay box may not necessarily comprise distinctively configured relay-connector enclosures, as do the prior art relay boxes. Alternatively, the relay-connector holders, when mounted into a relay box, may form a corresponding number of sections, which replace the enclosures mentioned in the prior art.

In addition, relay-connector holders may be prepared in a common and standardized fashion.

Furthermore, a relay-connector holder may have a flexible and simple structure, in which one single holder has several side faces on which one or several relay connector(s) is/are mounted. In such structure, it is very easy to change, depending on the case, the number of relay connectors to be used in a unitary relay box.

Another purpose of the present invention is to provide a relay box which conforms to the irregular shape of the inside layout of a vehicle. When each relay-connector holder forms an independent unit, a relay box containing several such unit holders may be bent around a plane formed between two adjacent unit holders, so that it can easily be adapted to irregular forms of a car's internal layout.

To the above end, there is provided a relay box comprising a housing for containing at least one relay connector, such as recited in claim 1.

The invention also relates to a relay box further comprising at least one relay connector fitted to the at least one relay-connector holder.

The invention further relates to a relay-connector holder adapted to receive a relay connector and to be used with the above relay-box, such as recited in claim 10.

According to the above-mentioned structure, when the number of relay connectors housed in the relay box decreases or increases, it is possible to respond flexibly, by simply changing the number of the above-mentioned relay-connector holders installed in the case.

Accordingly, when the number of relay connectors is limited, the relay-connector holders do not take up the space uselessly. The housing efficiency, as well as space occupation, is thus improved.

Further, since the relay-connector holder of the present invention has a rail or frame shape, it does not surround the relay connector. This implies a reduction in the amount of material to be used for manufacturing the relay-connector holder, and thus contributes to keeping costs down.

Moreover, because at least one of the end portions of the above-mentioned intermediate member is equipped with case-fixing means, and the latter fit with the holder-fixing means provided on the internal surface of the above-mentioned first case, e.g. the lower case, the relay-connector holder is mounted more securely. At the same time, since the relay-connector holder extends across the space between the two facing internal faces of the first case, e.g. the lower case, the relay-connector holder enhances the mechanical strength of the first case. Further, it is possible to install two relay connectors on one single relay-connector holder, by using the two side faces of its intermediate member.

When the two end portions of the intermediate member are equipped respectively with a case-fixing means, the counterpart holder-fixing means are formed correspondingly on the two internal surfaces of the first case, e.g. the lower case. The relay-connector holder thus increases further the mechanical strength of the first case. The relay-connector holder can be installed more securely in this manner.

The above-mentioned structure utilizes, instead of a relay block, a relay-connector holder which has a cassette-type construction with a flat surface, and can be attached or removed freely. Accordingly, even when a relay box is bent so as to conform to the irregular shape of the inside layout of a vehicle, the relay-connector holder can be mounted at any place inside the first case, e.g. the lower case, provided that each section of the first case defined by a bending plane comprises holder-fixing means.

The relay-connector holder can thus be used more widely, since it suffices to change the cases of the relay box as a function of the internal layout of a vehicle, without building a new relay-connector holder itself. Thus, the invention provides a relay box having a size and a shape better adapted to the user's needs.

The invention also relates to a method of housing at least one relay connector in a relay box comprising a housing for containing at least one relay connector, as defined in claim 1.

The above, and the other objects, features and advantages will be made apparent from the following description of the preferred embodiments, given as non-limiting examples, with reference to the accompanying drawings, in which:
- Figure 1 is a perspective view of a relay box of the present invention including a relay-connector holder, lower and upper cases and a sable guide portion, before they are assembled;
- Figure 2 is a perspective view of the relay-connector holder and part of the lower case, as well as of a relay connector;
- Figure 3 is a perspective and exploded view of prior art relay box; and
- Figure 4 is a perspective exploed view of relay box of another prior art.

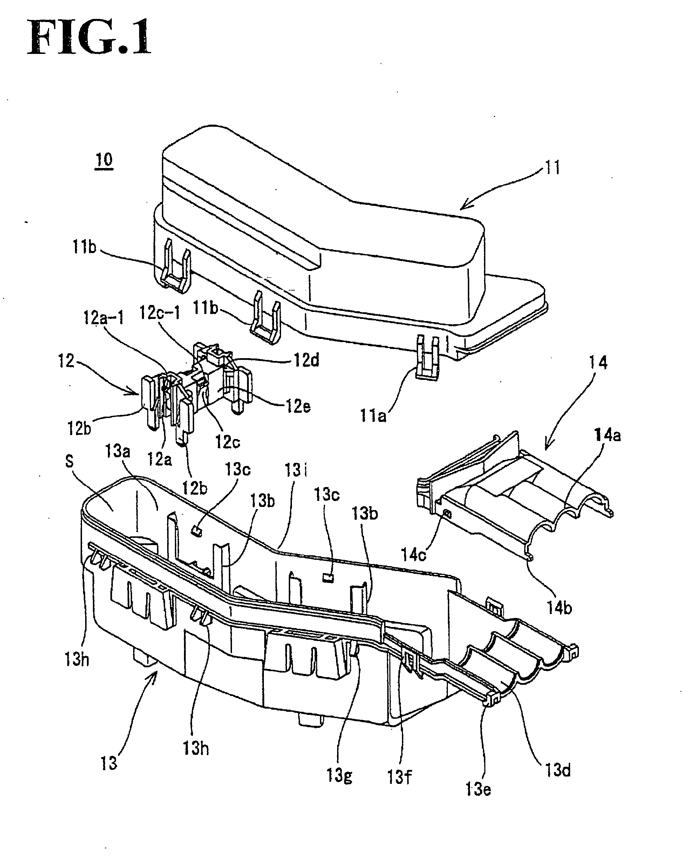

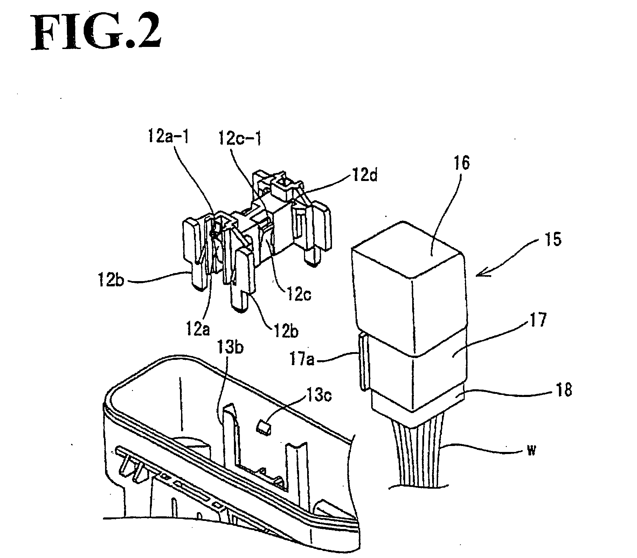

As shown in Figures 1 and 2, the relay box 10 comprises a relay-connector holder 12, which holds one or several relay connector(s) 15. This relay-connector holder 12 is housed and fixed in a first case 13, e.g. lower case. The relay box 10 is closed with a second case 11, e.g. upper case, and a guide cover 14.

The relay-connector holder 12 has an I-shape when viewed from above, and comprises an intermediate member 12e and end portions. The intermediate member 12e typically comprises a polygonal, e.g. rectangular, cross-section and side faces. Connector-fixing means 12c are provided on a side face of the intermediate member 12e of the I-shaped relay-connector holder 12.

The connector-fixing means 12c comprise a connector-fixing member 12c-1 e.g. a claw, which projects from or towards the upper end of the connector-fixing means 12c, as shown in figure 2. Further, the intermediate member 12e is provided with an intermediate-member-side sliding portion 12d adjacent its longitudinal end.

The two end faces of the intermediate member 12e are provided with respective case-fixing means 12a. The latter comprise a case-fixing member 12a-1, e.g. claw, which projects from or towards the upper end of the respective case-fixing means 12a, as shown in figure 2. The case-fixing means 12a further comprise a pair of holder-side sliding portions 12b flanking the case-fixing member 12a-1.

The first case 13, e.g. lower case, is bent or curved around a bending plane 13i, so as to configure the lower case 13 into two sections and to fit to the shape of the internal layout of vehicles. The lower case 13 comprises two internal surfaces 13a which face each other along the longitudinal direction of the case 13. Each of the two sections of lower case comprises a pair of holder-fixing member 13c arranged on the opposing internal surfaces 13a of the lower case 13, and a pair of case-side sliding portions 13b, arranged likewise. Further, a cable guide portion 13d is provided at one end of the lower case 13. Those external surfaces of lower case 13 extending in the longitudinal direction are provided with locking frames 13e, 13f for fixing the guide cover 14, as well as with locking protrusions 13g, 13h for fixing the upper case 11.

The second case 11, e.g. upper case, is designed so as to fit to the bent or curved shape of the lower case 13. The external surface of the upper case 11 comprises, at given positions, locking frames 11 a, 1 1b through which the upper case 11 is fixed to the lower case 13.

The guide cover 14 comprises a cable guide portion 14a for covering the cable guide portion 13d of the lower case 13, and further comprises locking protrusions 14b, 14c through which the two cable guide portions 13d, 14a are closed.

As shown in Figure 2, the relay connector 15 comprises a relay 16, and a hood portion 17 shown placed below in the figure. The hood portion 17 contains male terminals electrically connected to relay contact points (not shown in the figure). Further, a housing 18 contains female terminals connected to the end portions of electrical cables w (not shown in the figure). When the housing 18 is inserted into the hood portion 17, the male terminals and the female terminals are fitted and electrically connected.

The hood portion 17 comprises sliding portion(s) 17a on its side-surface. These sliding portions 17a fit with the intermediate-member-side sliding portion(s) 12d of the relay-connector holder 12. Further, an intermediate-member-fixing portion that fits to the connector-fixing member 12c-1 is provided at a position flanked by the sliding portion(s) 17a (not shown in the figure).

The above sliding portion(s) may be sliding rails or frames.

The relay box 10 is mounted as explained hereinafter.

As shown in Fig. 2, the sliding portions 17a of the relay connector 15 are inserted into the intermediate-member-side sliding portions 12d of the relay-connector holder 12 from below. Then, intermediate-member-fixing portion (not shown in the figure) of the relay connector 15 flexes the connector-fixing means 12c of relay-connector holder 12 and fits with the connector-fixing member 12c-1. In this manner, the relay connector 15 is attached to one side face of the intermediate member 12e.

Likewise, another relay connector 15 may be attached to another side face of the intermediate member 12e.

The holder-side sliding portions 12b of the relay-connector holder 12 (mounted with the relay connector 15) are inserted into the case-side sliding portions 13b of the lower case 13. In this manner, the holder-fixing member 13c of the lower case 13 flexes the case-fixing means 12a of the relay-connector holder 12 and fits with the case-fixing member 12a-1. The relay-connector holder 12 is thus held securely in the internal space S of the lower case 13.

The electrical cables w connected to the relay connector 15 are guided out of the relay box 10 through the cable guide portion 13d. The cable guide portion 14a of the guide cover 14 is then fitted to the cable guide portion 13d of the lower case 13. Subsequently, the locking protrusions 14b, 14c are fitted with the locking frames 13e, 13f of the lower case 13.

Finally, the locking frames 11 a, 11b of the upper case 11 are locked and fitted to the locking protrusions 13g, 13h of the lower case 13 to close it from above.

By virtue of the above structure, even if the relay box 10 has a bent or curved shape, it is possible to install the relay-connector holder 12 at any place of the internal space S of the lower case 13. This is made possible when the lower case 13 carries a holder-fixing member 13c which fits with the case-fixing member 12a-1 of the relay-connector holder 12, as well as case-side sliding portions 13b which fit with the holder-side sliding portions 12b of the relay-connector holder 12.

According to the invention, only the upper and lower cases 11, 13 need be modified as a function of the inside layout of the vehicles, but the relay-connector holder 12 need not be manufactured in a new design. The relay-connector holder 12 of the invention thus acquires a wide applicability, and it is then possible to provide a relay box having an appropriate size and shape responding to user's needs.

Further, when the number of relay connectors 15 housed in the relay box 10 must be changed, the number of relay-connector holders 12 is increased or reduced accordingly, and the latter are mounted into the lower case 13. The structure of the present invention thus allows a flexible response to the change of situations.

Consequently, when the number of relay connectors 15 is small, the size of upper and lower cases 11, 13 can be reduced so as to improve the space occupancy and optimise the effective use of space.

Moreover, the relay-connector holder 12 of the invention has a flat plate shape which does not wrap or enclose the relay connector 15, so that the material used for the relay-connector holder 12, and its costs, can be reduced.

Further, as the two end portions of the intermediate member 12e are fixed to the lower case 13, the relay-connector holder 12 can be mounted very securely. In addition, the relay-connector holder 12 is inserted between the opposing internal surfaces 13a of the lower case 13, so that the mechanical resistance of the latter is reinforced.

The relay connector 15 may be attached to only one side face, or to at least two side faces, of the relay-connector holder 12. Likewise, the case-fixing means 12a and the holder-side sliding portion(s) 12b, which fit the relay-connector holder 12 to the lower case 13, may be mounted on only one end portion, or on two end portions, of the intermediate member 12e.

As explained above, in the present invention, the number of relay-connector holders mounted into one of the two cases of a relay box can be selected as a function of the number of relay connectors to be contained in that relay box. Such a structure makes it possible to adopt a flexible approach to cope with the changing situations. Accordingly, even when the number of relay connectors used is limited, no relay-connector holder takes up the space uselessly. The housing efficiency of the relay box, as well as space optimisation, are thus improved.

Moreover, since the relay-connector holder has a flat surface shape which does not surround the relay connector(s) as in the past, material used for the relay-connector holder is reduced, lowering thus the manufacturing costs.

Furthermore, even if the internal layout in vehicles for installing a relay box is irregular or distorted, there is no need to design a new relay-connector holder. This is rendered possible by the fact that the lower or upper case comprises holder-fixing means for fixing the relay-connector holder (e.g. holder-fixing member), since the relay-connector holder can be mounted in a cassette-like manner, on any position inside the lower or upper case. In this manner, the relay box acquires a possibility of wider use, and provides a shape and size mostly suited to application requirements.

## Claims

1. A relay box (10) comprising a housing (11, 13) for containing at least two relay connectors (15), said relay box comprising at least one relay-connector holder (12) adapted for fixing at least two relay connectors (15) thereon, and at least one relay-connector holder fixing means (13b, 13c) formed on an internal face (13a) of said housing for engagingly receiving a respective relay-connector holder (12),
- said housing comprises a first case (13);
- said at least one relay-connector holder (12) comprises an intermediate member (12e) having a plurality of side faces, and end portions;
- at least one of said end portions comprises case fixing means (12a), whilst at least one side face of said intermediate member (12e) comprises at least two connector fixing means (12c); and
- said first case (13) comprises internal faces (13a) on which said relay-connector holder fixing means (13c) are provided, such that, when said relay-connector holder (12) is mounted into said first case (13), said case fixing means (12a) engage with said relay-connector holder fixing means (13c);
**characterized in that**:
- said housing further comprises a second case (11) forming with the first case an internal housing space (S), said space (S) containing said at least one relay-connector holder (12) adapted to receive two relay connectors (15);
- said side faces being opposite external side faces of the intermediate member having sensibly a polygonal cross-section, and said side faces having respective connector fixing means (12c).

2. A relay box (10) according to claim 1, further comprising at least one relay connector (15), wherein said relay connector (15) comprises an external face on which intermediate-member fixing means are provided, such that, when said relay connector (15) is mounted onto said relay-connector holder (12), said connector fixing means (12c) engage with said intermediate-member fixing means.

3. A relay box (10) according to claim 2, wherein said case-fixing means (12a) comprise a case-fixing member (12a-1) which projects substantially opposite to the direction in which said relay-connector holder (12) is mounted into said first case (13), and at least one holder-side sliding portion (12b), whilst said holder-fixing means (13c) comprise at least one holder-fixing member (13c) and at least one case-side sliding portion (13b).

4. A relay-box (10) according to claim 3, wherein said holder-side sliding portion (12b) and said case-side sliding portion (13b) form complementary sliding portions.

5. A relay-box (10) according to any one of claims 1 to 4, wherein said connector fixing means (12c) comprise a connector fixing member (12c-1) which projects substantially in the direction in which said relay connector (15) is mounted onto said relay-connector holder (12), and at least one holder-side sliding portion (12d), whilst said intermediate-member fixing means comprise at least one intermediate-member fixing portion and at least one connector-side sliding portion (17a).

6. A relay-box (10) according to claim 5, wherein said holder-side sliding portion (12d) and said connector-side sliding portion (17a) form complementary sliding portions.

7. A relay-box (10) according to any one of claims 1 to 6, wherein said first case (13) and said second case (11) are substantially bent around at least one bending plane (13i), thereby to define at least two sections, and each section comprises at least one holder fixing member (13c) and at least one case-side sliding portion (13b).

8. A relay-box (10) according to any one of claims 1 to 7, wherein said first case (13) further comprises a cable guide portion (13d), and a guide cover (14) adapted to cover and close said cable-guide portion (13d).

9. A relay-box (10) according to any one of claims 1 to 8 further comprising at least one relay connector (15) fitted to said at least one relay-connector holder (12).

10. A relay-connector holder (12) adapted to receive a relay connector (15) and to be used with the relay-box (10) according to any one of claims 1 to 9, **characterised in that** it comprises:
an intermediate member (12e) having sensibly a polygonal cross section, having two external opposite side faces, these side faces having respective connector fixing means (12c);
and end portions, at least one of said end portions comprises case fixing means for engaging with said at least one holder fixing means (13b, 13c) formed on an internal face (13a) of said case, by which said relay-connector holder is engagingly received in said case, whilst at least one side face of said intermediate member (12e) comprises at least one relay connector fixing means (12c) adapted for fixing at least one relay connector (15) thereon.

11. A relay-connector holder (12) according to claim 10, further comprising a relay connector (15) comprising an external face on which intermediate-member fixing means are provided, such that, when said relay connector (15) is mounted onto said relay-connector holder (12), said connector-fixing means (12c) engage with said intermediate-member-fixing means.

12. A method of housing at least two relay connectors (15) in a relay box (10) as defined in claim 1 comprising a housing (11, 13) for containing at least two relay connectors (15), **characterised in that** it comprises the steps of:
- providing at least one relay-connector holder (12) adapted for fixing at least two relay connectors (15) on opposite external side faces of an intermediate member of said relay-connector holder having a polygonal cross-section, said wall joining end portions of said intermediate member of said relay-connector holder;
- providing at least one relay-connector holder fixing means (13b, 13c) formed on an internal face (13a) of said housing for engagingly receiving a respective relay-connector holder (12),
- fixing at least two relay connectors (15) onto said opposite side faces of the intermediate portion belonging to said relay-connector holder (12), and
- fixing said at least one relay-connector holder (12) into said relay-connector holder fixing means (13b, 13c) of said housing.

## Patentansprüche

1. Relaisgehäuse bzw. -kasten (10), umfassend ein Gehäuse bzw. eine Ummantelung (11, 13) zum Aufnehmen bzw. Enthalten von wenigstens zwei Relaisverbindern (15), wobei das Relaisgehäuse wenigstens einen Relaisverbinder-Halter (12), welcher für ein Festlegen von wenigstens zwei Relaisverbindern (15) daran adaptiert ist, und wenigstens ein Relaisverbinder-Halter-Festlegungsmittel (13b, 13c) umfaßt, welches auf einer inneren Fläche (13a) des Gehäuses für ein ergreifendes Aufnehmen eines entsprechenden Relaisverbinder-Halters (12) ausgebildet ist,
- wobei das Gehäuse bzw. die Ummantelung ein erstes Gehäuse (13) umfaßt;
- wobei der wenigstens eine Relaisverbinder-Halter (12) ein zwischenliegendes bzw. Zwischenglied (12e) umfaßt, welches eine Vielzahl von Seitenflächen und Endabschnitten aufweist;
- wobei wenigstens einer der Endabschnitte Gehäuse- bzw. Behälter-Festlegungsmittel (12a) umfaßt, während wenigstens eine Seitenfläche des zwischenliegenden Glieds (12e) wenigstens zwei einen Verbinder festlegende bzw. Verbinder-Festlegungsmittel (12c) umfaßt; und
- wobei das erste Gehäuse (13) interne Flächen bzw. Seiten (13a) umfaßt, auf welchen die Relaisverbinder-Halter-Festlegungsmittel (13c) zur Verfügung gestellt sind, so daß, wenn der Relaisverbinder-Halter (12) in das erste Gehäuse (13) montiert ist, die Gehäuse-Festlegungsmittel (12a) mit den Relaisverbinder-Halter-Festlegungsmitteln (13c) in Eingriff gelangen;
**dadurch gekennzeichnet, daß**:
- das Gehäuse darüber hinaus ein zweites Gehäuse (11) umfaßt, welches mit dem ersten Gehäuse einen internen Gehäuse- bzw. Aufnahmeraum (S) ausbildet, wobei der Raum (S) den wenigstens einen Relaisverbinder-Halter (12) enthält, welcher adaptiert ist, um zwei Relaisverbinder (15) aufzunehmen;
- wobei die Seitenflächen, die außenliegenden Seitenflächen des zwischenliegenden Glieds gegenüberliegen, im wesentlichen einen polygonalen Querschnitt aufweisen, und wobei die Seitenflächen entsprechende Verbinder-Festlegungsmittel (12c) aufweisen.

2. Relaisgehäuse (10) nach Anspruch 1, weiterhin umfassend wenigstens einen Relaisverbinder (15), wobei der Relaisverbinder (15) eine externe Fläche bzw. Seite umfaßt, auf welcher das zwischenliegende Glied festlegende Mittel bzw. Zwischenglied-Festlegungsmittel vorgesehen bzw. zur Verfügung gestellt sind, so daß, wenn der Relaisverbinder (15) an dem Relaisverbinder-Halter (12) montiert bzw. angeordnet ist, die Verbinder-Festlegungsmittel (12c) mit den Zwischenglied-Festlegungsmitteln in Eingriff gelangen.

3. Relaisgehäuse (10) nach Anspruch 2, wobei die Gehäuse-Festlegungsmittel (12a) ein Gehäuse-Festlegungsglied (12a-1), welches im wesentlichen gegenüberliegend zu der Richtung vorragt, in welcher der Relaisverbinder-Halter (12) in das erste Gehäuse (13) montiert bzw. angeordnet ist, und wenigstens einen halterseitigen Gleitabschnitt (12b) umfassen, während die Halter-Festlegungsmittel (13c) wenigstens ein Halter-Festlegungsglied (13c) und wenigstens einen gehäuseseitigen Gleitabschnitt (13b) umfassen.

4. Relaisgehäuse (10) nach Anspruch 3, wobei der halterseitige Gleitabschnitt (12b) und der gehäuseseitige Gleitabschnitt (13b) komplementäre Gleitabschnitte bilden.

5. Relaisgehäuse (10) nach einem der Ansprüche 1 bis 4, wobei die Verbinder-Festlegungsmittel (12c) ein Verbinder-Festlegungsglied (12c-1), welches im wesentlichen in der Richtung vorragt, in welcher der Relaisverbinder (15) an dem Relaisverbinder-Halter (12) montiert bzw. angeordnet ist, und wenigstens einen halterseitigen Gleitabschnitt (12d) umfassen, während die Zwischenglied-Festlegungsmittel wenigstens einen Zwischenglied-Festlegungsabschnitt und wenigstens einen verbinderseitigen Gleitabschnitt (17a) umfassen.

6. Relaisgehäuse (10) nach Anspruch 5, wobei der halterseitige Gleitabschnitt (12d) und der verbinderseitige Gleitabschnitt (17a) komplementäre Gleitabschnitte ausbilden.

7. Relaisgehäuse (10) nach einem der Ansprüche 1 bis 6, wobei das erste Gehäuse (13) und das zweite Gehäuse (11) im wesentlichen um wenigstens eine biegende Ebene (13i) gebogen sind, um dadurch wenigstens zwei Abschnitte bzw. Querschnitte zu definieren, und jeder Abschnitt wenigstens ein Halter-Festlegungsglied (13c) und wenigstens einen gehäuseseitigen Gleitabschnitt (13b) umfaßt.

8. Relaisgehäuse (10) nach einem der Ansprüche 1 bis 7, wobei das erste Gehäuse (13) weiterhin einen Kabelführungsabschnitt (13d), und eine Führungsabdeckung (14) umfaßt, welche adaptiert ist, um den Kabelführungsabschnitt (13d) abzudecken und zu verschließen.

9. Relaisgehäuse (10) nach einem der Ansprüche 1 bis 8, weiterhin umfassend wenigstens einen Relaisverbinder (15), welcher an den wenigstens einen Relaisverbinder-Halter (12) angepaßt ist.

10. Relaisverbinder-Halter (12), welcher adaptiert ist, um einen Relaisverbinder (15) aufzunehmen und mit dem Relaisgehäuse (10) nach einem der Ansprüche 1 bis 9 verwendet zu werden, **dadurch gekennzeichnet, daß** er umfaßt:
ein zwischenliegendes bzw. Zwischenglied (12e), welches im wesentlichen einen polygonalen Querschnitt aufweist, welcher zwei äußere bzw. externe gegenüberliegende Seitenflächen aufweist, wobei diese Seitenflächen entsprechende Verbinder-Festlegungsmittel (12c) aufweisen;
und Endabschnitte, wobei wenigstens einer der Endabschnitte Gehäuse-Festlegungsmittel zum Gelangen in Eingriff mit dem wenigstens einen Halter-Festlegungsmittel (13b, 13c) umfaßt, welches an einer internen Fläche (13a) des Gehäuses ausgebildet ist, wodurch der Relaisverbinder-Halter eingreifend in dem Gehäuse aufgenommen ist, während wenigstens eine Seitenfläche des zwischenliegenden Glieds (12e) wenigstens ein Relaisverbinder-Festlegungsmittel (12c) umfaßt, welches zum Fixieren bzw. Befestigen wenigstens eines Relaisverbinders (15) darin adaptiert ist.

11. Relaisverbinder-Halter (12) nach Anspruch 10, weiterhin umfassend einen Relaisverbinder (15), welcher eine externe Fläche bzw. Seite umfaßt, auf welcher Zwischenglied-Festlegungsmittel vorgesehen sind, so daß, wenn der Relaisverbinder (15) an dem Relaisverbinder-Halter (12) montiert ist, die Verbinder-Festlegungsmittel (12c) in Eingriff mit den Zwischenglied-Festlegungsmitteln gelangen.

12. Methode zum Aufnehmen von wenigstens zwei Relaisverbindern (15) in einem Relaisgehäuse (10) nach Anspruch 1, umfassend ein Gehäuse bzw. eine Umhüllung (11, 13) zum Enthalten von wenigstens zwei Relaisverbindern (15), **dadurch gekennzeichnet, daß** sie die Schritte umfaßt:
- Bereitstellen wenigstens eines Relaisverbinder-Halters (12), welcher zum Festlegen von wenigstens zwei Relaisverbindern (15) an gegenüberliegenden äußeren Seitenflächen eines zwischenliegenden bzw. Zwischenglieds des Relaisverbinder-Halters adaptiert ist, welcher einen polygonalen Querschnitt aufweist, wobei die Wand Endabschnitte des zwischenliegenden Glieds des Relaisverbinder-Halters verbindet;
- Bereitstellen von wenigstens einem Relaisverbinder-Halter-Festlegungsmittel (13b, 13c), welches auf einer inneren bzw. internen Fläche (13a) des Gehäuses ausgebildet wird, um eingreifend einen entsprechenden Relaisverbinder-Halter (12) aufzunehmen,
- Festlegen von wenigstens zwei Reiaisverbindern (15) an den gegenüberliegenden Seitenflächen des zwischenliegenden Abschnitts, welcher zu dem Relaisverbinder-Halter (12) gehört, und
- Festlegen des wenigstens einen Relaisverbinder-Halters (12) in dem Relaisverbinder-Halter-Festlegungsmittel (13b, 13c) des Gehäuses.

## Revendications

1. Boîtier à relais (10) comprenant un logement (11, 13) pour contenir au moins deux connecteurs à relais (15), le dit boîtier à relais comprenant au moins une monture de connecteurs à relais (12) sur laquelle on peut fixer au moins deux connecteurs à relais (15), et au moins un moyen de fixation de monture de connecteurs à relais (13b, 13c) formé sur une face intérieure (13a) du dit logement de manière à venir en prise avec une monture de connecteurs à relais respective (12),
le dit logement comprend une première coquille (13) ;
la dite au moins une monture de connecteurs à relais (12) comprend un élément intermédiaire (12e) ayant une pluralité de faces latérales, et des parties d'extrémité ;
au moins une des dites parties d'extrémité comprend un moyen de fixation de coquille (12a) tandis qu'au moins une face latérale du dit élément intermédiaire (12e) comprend au moins deux moyens de fixation de connecteur (12c) ; et
la dite première coquille (13) présente des faces intérieures (13a) sur lesquelles sont prévus les dits moyens de fixation de monture de connecteurs à relais (13c) de sorte que, lorsque la dite monture de connecteurs à relais (12) est montée dans la dite première coquille (13), les dits moyens de fixation de coquille (12a) s'enclenchent avec les dits moyens de fixation de monture de connecteurs à relais (13c) ;
**caractérisé en ce que** :
le dit logement comprend en outre une deuxième coquille (11) définissant avec la première coquille un espace de logement intérieur (S), le dit espace (S) contenant la dite au moins une monture de connecteurs de relais (12) prévue pour recevoir deux connecteurs à relais (15) ;
les dites faces latérales étant des faces latérales extérieures opposées de l'élément intermédiaire ayant sensiblement une section transversale polygonale, et les dites faces latérales comportant des moyens de fixation de connecteur respectifs (12c).

2. Boîtier à relais (10) selon la revendication 1, comprenant en outre au moins un connecteur à relais (15), dans lequel le dit connecteur à relais (15) présente une face extérieure sur laquelle des moyens de fixation d'élément intermédiaire sont prévus de sorte que, lorsque le dit connecteur à relais (15) est monté sur la dite monture de connecteurs à relais (12), les dits moyens de fixation de connecteur (12c) sont en prise avec les dits moyens de fixation d'élément intermédiaire.

3. Boîtier à relais (10) selon la revendication 2, dans lequel les dits moyens de fixation de coquille (12a) comprennent un élément de fixation de coquille (12a-1) qui fait saillie sensiblement à l'opposé de la direction dans laquelle la dite monture de connecteurs à relais (12) est montée dans la dite première coquille (13), et au moins une partie de glissement côté monture (12b), tandis que les dits moyens de fixation de monture (13c) comprennent au moins un élément de fixation de monture (13c) et au moins une partie de glissement côté coquille (13b).

4. Boîtier à relais (10) selon la revendication 3, dans lequel la dite partie de glissement côté monture (12b) et la dite partie de glissement côté coquille (13b) forment des parties de glissement complémentaires.

5. Boîtier à relais (10) selon une quelconque des revendications 1 à 4, dans lequel les dits moyens de fixation de connecteur (12c) comprennent un élément de fixation de connecteur (12c-1) qui fait saillie sensiblement dans la direction dans laquelle le dit connecteur à relais (15) est monté sur la dite monture de connecteurs à relais (12), et au moins une partie de glissement côté monture (12d), tandis que les dits moyens de fixation d'élément intermédiaire comprennent au moins une partie de fixation d'élément intermédiaire et au moins une partie de glissement côté connecteur (17a).

6. Boîtier à relais (10) selon la revendication 5, dans lequel la dite partie de glissement côté monture (12d) et la dite partie de glissement côté connecteur (17a) forment des parties de glissement complémentaires.

7. Boîtier à relais (10) selon une quelconque des revendications 1 à 6, dans lequel la dite première coquille (13) et la dite deuxième coquille (11) sont sensiblement coudées autour d'au moins un plan de pliage (13i), afin de définir au moins deux sections, et chaque section comprend au moins un élément de fixation de monture (13c) et au moins une partie de glissement côté coquille (13b).

8. Boîtier à relais (10) selon une quelconque des revendications 1 à 7, dans lequel la dite première coquille (13) comprend en outre une partie de guidage de câble (13d) et un couvercle de guidage (14) prévu pour couvrir et fermer la dite partie de guidage de câble (13d).

9. Boîtier à relais (10) selon une quelconque des revendications 1 à 8, comprenant en outre au moins un connecteur à relais (15) fixé à la dite au moins une monture de connecteurs à relais (12).

10. Monture de connecteur à relais (12) prévue pour recevoir un connecteur à relais (13) et pour être utilisée avec le boîtier à relais (10) selon une quelconque des revendications 1 à 9,
**caractérisée en ce qu'**elle comprend :
un élément intermédiaire (12e) ayant une section transversale sensiblement polygonale présentant deux faces latérales extérieures opposées, ces faces latérales comportant des moyens de fixation de connecteur respectifs (12c) ; et
des parties d'extrémité, au moins une des dites parties d'extrémité comprenant des moyens de fixation de coquille pour venir en prise avec le dit au moins un moyen de fixation de monture (13b, 13c) formé sur une face intérieure (13a) de la dite coquille, de sorte que la dite monture de connecteurs à relais est reçue en prise dans la dite coquille, tandis qu'au moins une face latérale du dit élément intermédiaire (12e) comprend au moins un moyen de fixation de connecteur à relais (12c) prévu pour fixer au moins un connecteur à relais (15) sur la dite monture.

11. Monture de connecteur à relais (12) selon la revendication 10, comprenant en outre un connecteur à relais (15) présentant une face extérieure sur laquelle des moyens de fixation d'élément intermédiaire sont prévus de sorte que, lorsque le dit connecteur à relais (15) est monté sur la dite monture de connecteurs à relais (12), les dits moyens de fixation de connecteur (12c) s'enclenchent avec les dits moyens de fixation d'élément intermédiaire.

12. Procédé pour loger au moins deux connecteurs à relais (15) dans un boîtier à relais (10) selon la revendication 1, comprenant un logement (11, 13) pour contenir au moins deux connecteurs à relais (15),
**caractérisé en ce qu'**il comprend les étapes de :
préparation d'au moins une monture de connecteurs à relais (12) prévue pour fixer au moins deux connecteurs à relais (15) sur les faces latérales extérieures opposées d'un élément intermédiaire de la dite monture de connecteurs à relais ayant une section transversale polygonale, la dite paroi reliant les parties d'extrémité du dit élément intermédiaire de la dite monture de connecteurs à relais ;
préparation d'au moins un moyen de fixation de monture de connecteurs à relais (13b, 13c) formé sur une face intérieure (13a) du dit logement pour recevoir et retenir une monture de connecteurs à relais respective (12) ;
fixation d'au moins deux connecteurs à relais (15) sur les dites faces latérales opposées de la partie intermédiaire appartenant à la dite monture de connecteurs à relais (12) ; et
fixation de la dite au moins une monture de connecteurs à relais (12) dans les dits moyens de fixation de monture de connecteurs à relais (13b, 13c) du dit logement.
